# EUROPEAN PATENT APPLICATION

(11) **EP 4 589 399 A1**
(43) Date of publication of application: **23.07.2025**
(21) Application number: 24219024.7
(22) Date of filing: 11.12.2024
(51) Int. Cl.: G05D 1/648, G05D 1/245, G05D 1/246, G05D 1/248, G05D 1/644, G05D 105/15, G05D 107/20, G05D 109/10

(54) **IMPROVED PLANNING FOR A ROBOTIC WORK TOOL**

(30) Priority: 17.01.2024 SE 2450050
(71) Applicant: Husqvarna AB, 561 82 Huskvarna (SE)
(72) Inventor: Sigurdarson, Logi, Huskvarna (SE); Shah, Arvind, Huskvarna (SE)

(57) **Abstract**

A robotic work tool system (200) comprising a robotic work tool (100) arranged to operate in an operational area (205) having one or more satellite-shadowed areas (SA), wherein the robotic work tool (100) is configured to operate according to the satellite navigation sensor (175) outside the one or more satellite-shadowed areas (SA) and according to the one or more deduced reckoning sensors (180) inside the one or more satellite-shadowed areas (SA), wherein a memory (120) is configured to store a map of the operating area, said map application indicting a number of obstacles (H, T), and wherein a controller (110, 240A) is configured to determine (510) a first segmentation of the operating area (205) by minimizing (520) a navigational error introduced in the one or more satellite-shadowed areas (SA).

## Description

### TECHNICAL FIELD

This application relates to a robotic work tool, such as a lawnmower, and a method for providing an improved planning of operation for the robotic work tool, and in particular to a robotic work tool, such as a lawnmower, and a method for providing an improved planning for the robotic work tool utilizing sensor navigation as an alternative or supplement to satellite navigation.

### BACKGROUND

Automated or robotic work tools such as robotic lawnmowers are becoming increasingly more popular and so is the use of the robotic work tool in various types of operational areas.

Operating requirements, in particular for robotic work tools being robotic lawnmowers, often include requirements both relating to safety (such as staying inside boundaries) and requirements to perform (advanced) patterns and also to take into account local features (such as flowerbeds). Utilizing navigation techniques relying on satellite navigation will enable for all such requirements to be fulfilled, as long as the satellite position is trusted (can be determined reliably. When satellite reception is not trusted, many contemporary robotic work tools rely on alternative or supplemental navigation techniques, such as visual navigation, deduced navigation or other sensor-based navigation. However, all such navigation techniques suffer from various drawbacks, all resulting in that the position determined is not always accurately determined.

By defining the quality of the RTK-GPS quality, it is possible to prioritize systematic planning with shorter coherent travel in areas with low GPS signal reception. This improves positioning by attaining a good quality GPS signal more frequently and thereby minimizing errors in positioning caused by positioning drift when dead-reckoning.

When planning for systematic missions, several planning objectives can be desirable. It can be minimizing the time to mow an area, increase the quality of the mowing or attaining a visually appealing pattern from the striping left by the mower. A known challenge for GPS-equipped mowers performing systematic cutting patterns are areas with low GPS accuracy such as areas close to high trees and buildings. When traversing these areas, the mower is forced to rely heavily on the positioning derived from dead-reckoning (wheel odometry).

Thus, there is a need for an improved manner of providing advanced navigational functionality utilizing sensor-based based navigation as an alternative to satellite navigation.

### SUMMARY

The teachings proposed here suggests a way to incorporate low-accuracy satellite zones into the planning of a back-and-forth systematic operating pattern in a way that can avoid spending prolonged times relying on dead-reckoning or other relative positional navigation while also weighing in other criteria. It is therefore an object of the teachings of this application to overcome or at least reduce those problems by providing a robotic work tool system comprising a robotic work tool arranged to operate in an operational area having one or more satellite-shadowed areas (SA), a controller, a memory, a satellite navigation sensor and one or more deduced reckoning sensors, wherein the robotic work tool is configured to operate according to the satellite navigation sensor outside the one or more satellite-shadowed areas (SA) and according to the one or more deduced reckoning sensors inside the one or more satellite-shadowed areas (SA), wherein the memory is configured to store a map of the operating area, said map application indicting a number of obstacles (H, T), and wherein the controller is configured to determine a first segmentation of the operating area by minimizing a navigational error introduced in the one or more satellite-shadowed areas (SA).

In some embodiments the controller is further configured to minimize the navigational error introduced in the one or more satellite-shadowed areas (SA) by
minimizing the time spent in the one or more satellite-shadowed areas (SA).

In some embodiments the controller is further configured to minimize the navigational error introduced in the one or more satellite-shadowed areas (SA) by minimizing the distance travelled in the one or more satellite-shadowed areas (SA).

In some embodiments the controller is further configured to minimize the navigational error introduced in the one or more satellite-shadowed areas (SA) by minimizing the time travelled in the one or more satellite-shadowed areas (SA).

In some embodiments the controller is further configured to minimize the navigational error introduced in the one or more satellite-shadowed areas (SA) by minimizing the number of manoeuvres in the one or more satellite-shadowed areas (SA).

In some embodiments the controller is further configured to determine a first score for the first segmentation, determine a second segmentation, determine a second score for the second segmentation, compare the first score to the second score and select the segmentation with the lowest score.

In some embodiments the controller is further configured to determine the score for a segmentation based on the time spent in the one or more satellite-shadowed areas (SA).

In some embodiments the controller is further configured to determine the score for a segmentation based on the distance travelled in the one or more satellite-shadowed areas (SA).

In some embodiments the controller is further configured to determine the score for a segmentation based on the number of manoeuvres in the one or more satellite-shadowed areas (SA).

In some embodiments the controller is further configured to determine a planned traversal of a segment in the segmentation as back-and-forth.

In some embodiments the controller is further configured to determine the planned traversal of a segment in the segmentation as back-and-forth in a satellite-shadowed area in a direction not parallel to a longer extent of the satellite-shadowed area.

In some embodiments the robotic work tool is a robotic lawnmower.

In some embodiments the robotic work tool system comprises a server comprising the controller.

In some embodiments the robotic work tool comprises the controller.

It is also an object of the teachings of this application to overcome the problems by providing a method for use in a robotic work tool system comprising a robotic work tool arranged to operate in an operational area having one or more satellite-shadowed areas (SA), a controller, a memory, a satellite navigation sensor and one or more deduced reckoning sensors, wherein the robotic work tool is configured to operate according to the satellite navigation sensor outside the one or more satellite-shadowed areas (SA) and according to the one or more deduced reckoning sensors inside the one or more satellite-shadowed areas (SA), wherein the memory is configured to store a map of the operating area, said map application indicting a number of obstacles (H, T), and wherein the method comprises determining a first segmentation of the operating area by minimizing a navigational error introduced in the one or more satellite-shadowed areas (SA).

It is also an object of the teachings of this application to overcome the problems by providing a computer-readable medium carrying computer instructions that when loaded into and executed by a controller of a robotic work tool enables the robotic work tool to implement the method according to herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system according to some example embodiments of the teachings herein;
Figure 3A shows a schematic view of a sensor array of a robotic work tool system according to some example embodiments of the teachings herein;
Figure 3B shows a schematic view of a sensor array of a robotic work tool system according to some example embodiments of the teachings herein;
Figure 3C shows a schematic view of a sensor array of a robotic work tool system according to some example embodiments of the teachings herein;
Figure 4A shows a schematic view of a sensor array of a robotic work tool system according to some example embodiments of the teachings herein;
Figure 4B shows a schematic view of a sensor array of a robotic work tool system according to some example embodiments of the teachings herein;
Figure 5 shows a corresponding flowchart for a method according to some example embodiments of the teachings herein; and
Figure 6 shows a schematic view of a computer-readable medium carrying computer instructions that when loaded into and executed by a controller of a robotic work tool, enables the robotic work tool to implement the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

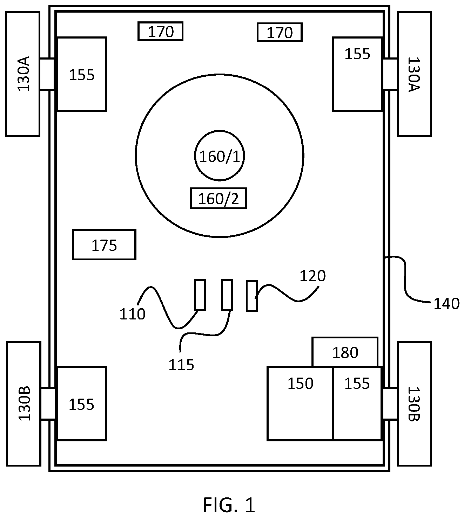

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

In some embodiments, and as will be discussed below, the robotic work tool is a semi-controlled or at least supervised autonomous work tool, such as farming equipment or large lawnmowers (for example riders). In some embodiments the robotic work tool comprises tractors being autonomously controlled.

It should also be noted that the robotic work tool is a self-propelled robotic work tool, capable of autonomous navigation within an operational area, where the robotic work tool propels itself across or around the operational area in a pattern (random or predetermined).

The robotic work tool 100, exemplified as a robotic lawnmower 100, has a main body part 140, possibly comprising a chassis 140 and an outer shell, and a plurality of wheels 130 (in this example four wheels 130, but other number of wheels are also possible, such as three or six). The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

In some embodiments, the robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.1 1b), Global System Mobile (GSM) and LTE (Long Term Evolution), to name a few. The robotic lawnmower 100 may be arranged to communicate with a user equipment for providing information regarding status, location, and progress of operation to the user equipment as well as receiving commands or settings from the user equipment. Alternatively or additionally, the robotic lawnmower 100 may be arranged to communicate with a server for providing information regarding status, location, and progress of operation as well as receiving commands or settings. The robotic lawnmower 100 may - in some embodiments - especially be configured for transmitting sensor readings of features and receiving positional data for features.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

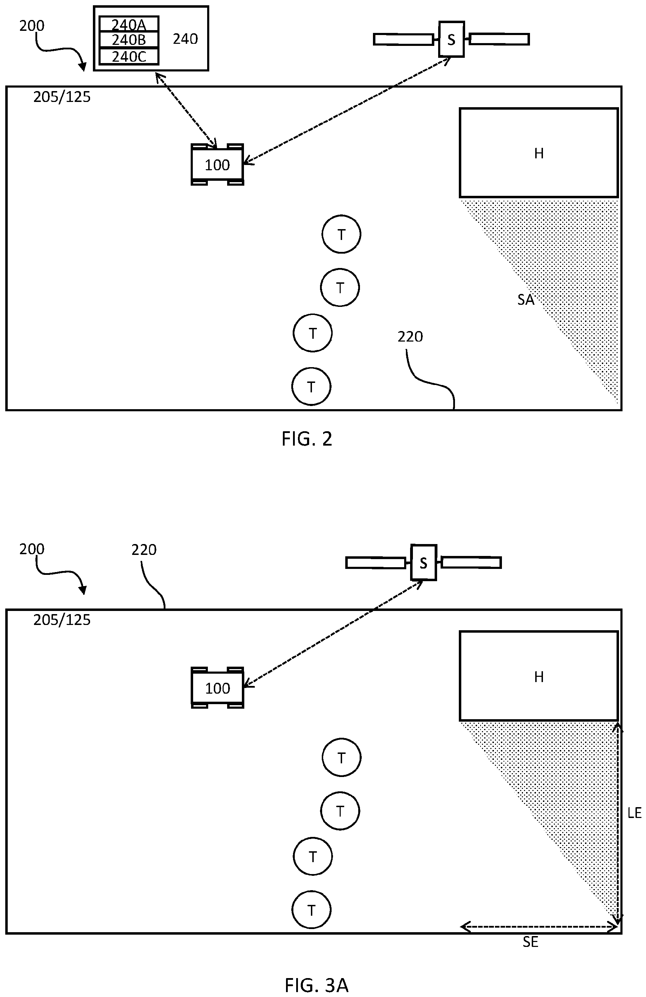

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a (electromagnetic) boundary (not shown explicitly in figure 2 but deemed to be included in the boundary 220) enclosing an operational area (referenced 205 in figure 2).

The robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic work tool to operate in an operational area bounded by a virtual border (not shown explicitly in figure 2 but deemed to be included in the boundary 220).

The satellite navigation sensor 175 is configured to provide a position, hereafter a satellite position. Depending on positions of the satellites relative the robotic work tool 100 and environmental factors in or close to the work area, the accuracy of the position determined through satellite navigation sensor 175 may vary. In the field of satellite navigation, and herein, a reliably received or determined position is a position for which the accuracy exceeds a threshold. The accuracy may be determined based on the number of satellites signals received. The accuracy may alternative or additionally be determined as a variance in time, where a great variance or fluctuation indicates an inaccurate position. It should be noted that "reliably received" - however worded - is a recognized situation in satellite navigation and needs no further explanation.

In some embodiments the distance sensors 180 comprises visual sensors arranged to determine a distance to a feature.

In some embodiments the distance sensors 180 comprises radar sensors arranged to determine a distance to a feature.

In some embodiments the distance sensors 180 comprises lidar sensors arranged to determine a distance to a feature.

In some embodiments robotic lawnmower 100 also comprises deduced reckoning sensors 180. The deduced reckoning sensors 180 may be odometers, accelerometers, and/or an Inertial Measurement Unit (IMU) sensor or other deduced reckoning sensors. In some embodiments these additional sensors 180 comprises a visual odometery sensor, possibly comprised in or connected to the deduced reckoning sensors 180. In some embodiments, the visual odometry sensor is a camera or other image sensor, allowing for image processing to be used to perform a position determination as is known in the field of robot navigation. In some embodiments, the navigation is based on SLAM, and in some embodiments, where a visual odometry sensor (such as a camera) 180A is utilized, the navigation is based on V-SLAM.

In some embodiments, the deduced reckoning sensors 180 comprises radar and/or LIDAR sensors 180.

In some embodiments, the deduced reckoning sensors 180 are comprised in the propulsion device, wherein a deduced reckoning navigation may be provided by knowing the current supplied to a motor and the time the current is supplied, which will give an indication of the speed and thereby distance for the corresponding wheel.

The satellite navigation sensor 175, the deduced reckoning sensor 180, alone or in any combination, enables the robot to operate according to a map of the operational area, such as the map stored in the memory 120. As mentioned, the robotic lawnmower 100 is (in some embodiments) arranged to operate according to a map application (indicated in figure 2 and referenced 125) representing one or more operational areas (and possibly the surroundings of the operational area(s)) as well as features of the operational area(s) stored in the memory 120 of the robotic lawnmower 100. In some embodiments, the map application also includes one or more transport areas. In some embodiments, the map application, or simply the map 125, may be generated or supplemented as the robotic lawnmower 100 operates or otherwise moves around in the operational area.

In some embodiments, the map 125, is generated or supplemented by robotic lawnmower 100 processing the sensor readings, identifies features, and stores data on these features.

In some embodiments, the map application is downloaded, possibly from a server (not shown in figure 1, but referenced 240 in figure 2).

In some embodiments, the map 125, is generated or supplemented by the robotic lawnmower 100 uploading sensor readings to the server 240, which processes the sensor readings, identifies features, stores data on these features and forwards these stored data on the identified features to the robotic work tool 100.

The server 240 comprises a communication interface 240A, a controller 240B and a memory 240B, which operate in a manner similar to that of the controller 110, communication interface 115 and memory 120 discussed above as a skilled person would understand.

It should be understood that in some embodiments, processing is performed locally in the controller 110 of the robotic work tool 100, in some embodiments, processing is performed remotely in the controller 240B of the server 240, and in some embodiments, processing is performed partially locally in the controller 110 of the robotic work tool 100 and performed partially remotely in the controller 240B of the server 240.

In some embodiments the robotic work tool is arranged or configured to traverse and operate in operational areas, such as gardens, that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in an operational area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in an operational area that contains obstacles that are overhanging, i.e. obstacles that may not be detectable from the ground up, such as low hanging branches of trees or bushes. Such an operational area is thus not simply a flat lawn to be mowed or similar, but an operational area of unpredictable structure and characteristics. The operational area exemplified with reference to figure 2 below, may thus be such a non-uniform operational area as disclosed in this paragraph that the robotic work tool is arranged to traverse and/or operate in.

Figure 2 shows a robotic work tool system 200 in some embodiments. The schematic view is not to scale. The robotic work tool system 200 comprises one or more robotic work tools 100 according to the teachings herein arranged to operate in one or more operational areas 205 bounded by a (virtual or other) boundary 220. It should be noted that the operational area 205 shown in figure 2 is simplified for illustrative purposes. The view of the operational area 205 is also intended to be an illustration or graphical representation of the map application 125 discussed in the above. The boundary may be a virtual boundary based on the map application 125, as discussed in the above. The virtual boundary may in some embodiments be supplemented by an electromagnetic boundary.

As with figure 1, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within an operational area.

As is shown in figure 2 there may be obstacles, also referred to as features, such as houses (referenced H), structures, flowerbeds, trees (referenced T) and lamps to mention a few examples in the operational area 205. As is also shown, the satellite sensor 175 is receiving satellite signals from a satellite S. And, in some areas, these signals may be blocked (as behind the house H), and there will be an area where satellite reception is less reliable, a s so-called satellite-shadowed area referenced SW.

In such shadowed-areas SA where the satellite reception is less reliable, the robotic work tool 100 may be more reliant on deduced reckoning (or other navigation methods) to follow a planned operating path. As is known deduced reckoning often experiences a drift in its determined position as the deduced reckoning sensors determine a new position based on an old position (a relative positional system) based on sensor input indicating a movement, where the new position is determined as the old position plus the movement (vector). If there is an error in determining either the old position or the movement, the error in determining the new position will propagate. The inventors have realized that the longer the robotic work tool 100 is in a shadowed-area, the greater will this error become, and the inventors are therefore proposing that when planning how to traverse the operating area 205 care should be taken so that the robotic work tool 100 spends as little time in the shadowed area SA as possible. Notably, care should be taken so that the robotic work tool 100 spends as little time in the shadowed area SA as possible at a time, before re-attaining a good GPS signal/position. A robotic work tool 100 is thus provided for which a plan for operating in the operating area 205 is determined or planned so that the time spent in a shadowed area SA is minimized.

This is one example of how to minimize a navigational error introduced in the one or more satellite-shadowed areas (SA).

The shadowed area may be determined over time based on detecting the signal reception in various portions of the operating area. The shadowed area may also be determined by analyzing structures and objects in or around the operating area in relation to known satellite positions.

Such manners of determining a shadowed area are known and not at the heart of the teachings herein and will therefore be assumed to be known to a skilled person and not discussed in further details.

In some embodiments the time spent in the shadowed area SA is minimized for each traversal of the shadowed-area, by determining a first time for a first manner of traversing the shadowed area and determining a second time for a second manner of traversing the shadowed area and selecting the manner having the shortest time.

In some embodiments the time spent in the shadowed area SA is minimized for each traversal of the shadowed-area, by determining a longer extent of the shadowed area, and plan the operation so that the robotic work tool 100 traverses the shadowed area SA in a direction that is not parallel to the longer extent. In some such embodiments, the robotic work tool 100 is planned to traverse the shadowed area SA in a direction that is orthogonal to the longer extent. In some such embodiments, the direction is between 45 and 135, between 60 and 120, or between 80 and 100 degrees to the longer extent.

Figure 3A shows a schematic illustration of a robotic work tool system 200 as in figure 2, where two extents of the shadowed area SA has been determined, a first extent LE and a second extent SE, wherein the first extent is longer than the second extent, thus being the longer extent LE. It should be noted that many different manners of determining a longer extent are possible and also depends on the shape of the shadowed area.

In some embodiments the time spent in the shadowed area SA is minimized for each traversal of the shadowed-area, so that the robotic work tool 100 is planned to leave the shadowed area for each pass of the shadowed area, so that it can (re-)acquire a correct location using the satellite navigation sensor 175.

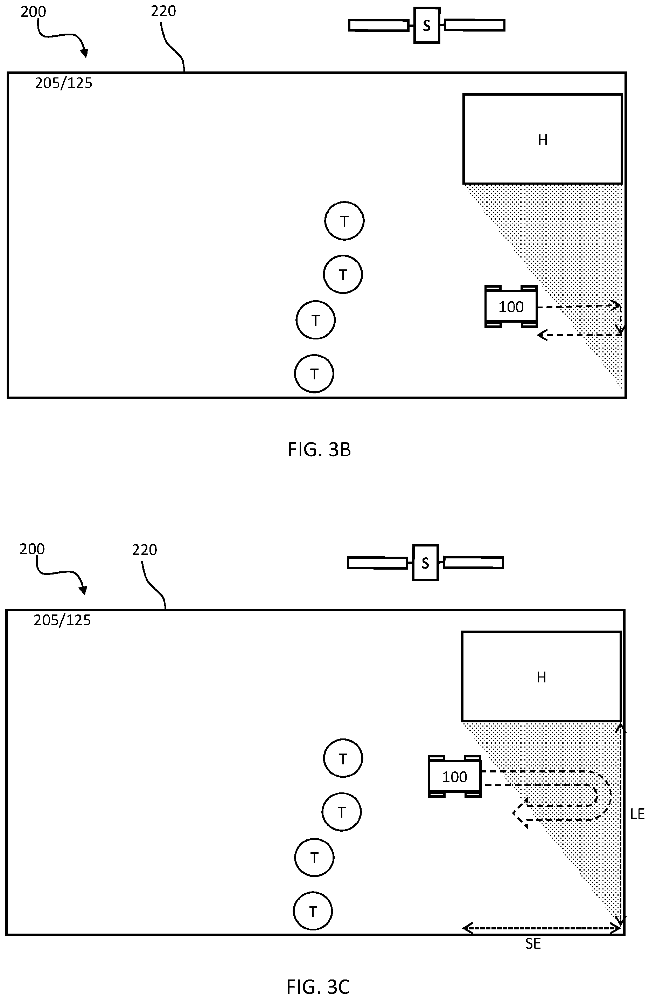

Figure 3B shows a schematic illustration of a robotic work tool system 200 as in figure 3A, where the robotic work tool 100 has been planned to enter at a direction not parallel to the longer extent and also to leave the shadowed area for each traversal.

This allows the robotic work tool 100 to spend less time in the shadowed area compared to for example traversing the shadowed area in a direction parallel to the longer extent.

The time spent utilizing deduced reckoning (or other relative positioning navigation manner) is thus minimized or at least reduced, thereby preventing the navigational error to grow or increase over time.

The robotic work tool system is thus configured to operate according to a plan where the time spent in a shadowed area is reduced, where the robotic work tool 100 is configured to operate based on satellite navigation (such as through the satellite navigation sensor 175) outside the shadowed area SA, and based on relative positional navigation (such as based on deduced reckoning sensors 180) inside the shadowed area SA. This is one example of how to minimize a navigational error introduced in the one or more satellite-shadowed areas (SA).

The inventors have realized that when planning how to traverse the operating area 205 care should be taken so that not only does the robotic work tool 100 spend as little time in the shadowed area as possible, but also that the number of navigational manoeuvres (for example turns) inside the shadowed area are minimized. This is also one example of how to minimize a navigational error introduced in the one or more satellite-shadowed areas (SA).

In some embodiments the number of navigational manoeuvres in the shadowed area SA is minimized, by determining a first number of navigational manoeuvres for a first manner of traversing the shadowed area and determining a second number of navigational manoeuvres for a second manner of traversing the shadowed area and selecting the manner having the lower number of navigational manoeuvres.

In some embodiments the number of navigational manoeuvres in the shadowed area SA is minimized by the robotic work tool 100 being planned to leave the shadowed area for each pass of the shadowed area, so that it can (re-)acquire a correct location using the satellite navigation sensor 175.

The inventors have also realized that when planning how to traverse the operating area 205 care should be taken so that the distance travelled inside the shadowed area is minimized. This is also one example of how to minimize a navigational error introduced in the one or more satellite-shadowed areas (SA).

In some embodiments the distance travelled in the shadowed area SA is minimized, by determining a first distance travelled for a first manner of traversing the shadowed area and determining a second distance travelled for a second manner of traversing the shadowed area and selecting the manner having the shorter distance travelled.

Figure 3C shows a schematic illustration of how the robotic work tool 100 is planned to only perform one manoeuvre (a U-turn) in the shadowed area for each pass of the shadowed area.

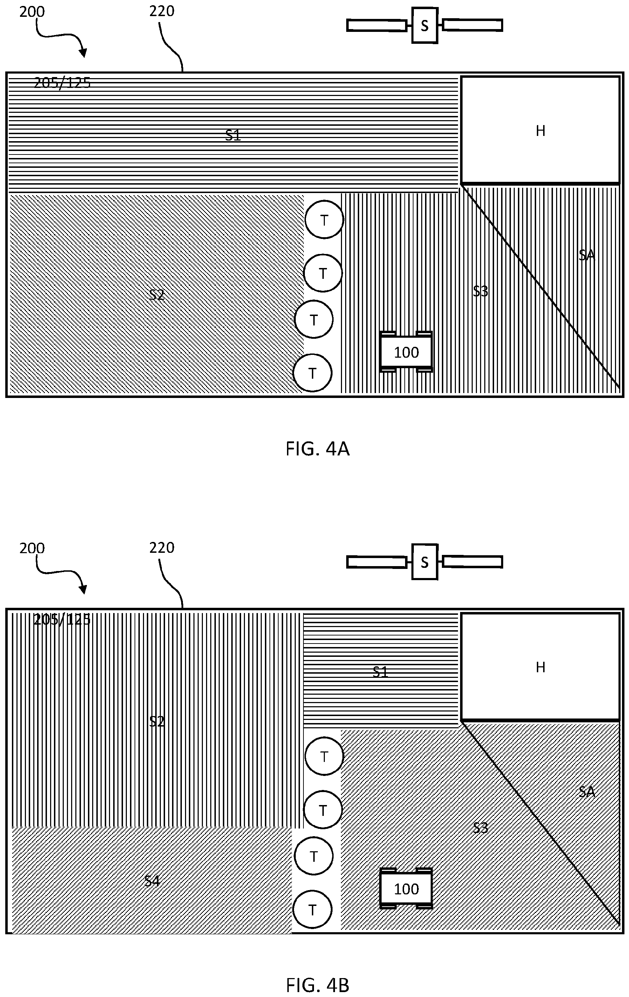

Figure 4A shows a schematic illustration of a robotic work tool system 200 as in figure 2, wherein the operational area 205 has been segmented into one or more segments. The segmentation can be performed based on different criteria, such as time spent in each segment (with regards taken to for example capabilities such as battery life of the robotic work tool 100) or the positions of objects allowing for operating in a segment without having to circum-navigating objects.

In the example of figure 4A, the operational area 205 has been segmented into three segments S1, S2, and S3. It should be noted that this is only one example, and several variations are possible, with regards to location, size, extent and operating direction within the segment and also with regards to other parameters.

In the example of figure 4A a first segment S1 is determined in the upper part of the operating area 205, where the robotic work tool 100 will be able to operate unhindered back and forth; to the house H and back, along straight lines (in a first direction).

A second segment S2 is also determined in the left part of the operating area 205, where the robotic work tool 100 will be able to operate unhindered back and forth, to the trees T and back, along straight lines (in a second direction). As is shown the directions that a segment is traversed may be different between some (two or more) segments. They may also be the same for some (two or more) segments.

A third segment S3 is also determined in the right part of the operating area 205, where the robotic work tool 100 will be able to operate unhindered back and forth, to the house H and back, along the trees T in straight lines (in a third direction).

In some embodiments the operating area is segmented by the planning, by applying or following imaginary or virtual lines in the map 125, and as soon as a line is broken (such as by encountering an obstacle), an end of the segment is detected and the line is followed in a different (for example opposite) direction. If the line is able to be followed past a previously detected (expected) end of a segment, indicating that an end of an object has been detected, a second end of the segment is determined so that one side of the object is defined as a segment. Figure 4A shows one such segment S1, where the segment ends downwards as the house ends.

The robotic work tool system 200 is thus configured, in some embodiments, to segment an operating area based on the map 125, by identifying (or retrieving indications of) obstacles in the operating area 205 and follow a line over the map from a starting position (that may be selected randomly, or as the location of a charging station, or as an entry from a traversal area), and as soon as the line encounters an obstacle and end of the segment is determined, the line changes direction and as the line comes back to a location in line with the starting position (the starting position thus determining one end of the segment) the line turns again. This is continued until the line is able to pass an end of the segment, whereby the segment is closed. Thereafter a new segment is found or determined, by selecting a new starting point, such as on another side of the obstacle.

It should be noted that the line need not be followed as in a continuous monitoring by the planning, but simply laid out by the planning. The line then also indicates a direction of travel for the robotic work tool 100 when operating in the segment.

In some embodiments, the planning is performed so that several segmentations are made of the operating area 205, where different starting points are selected. In such embodiments, the map 125 may also be rotated, or rather the starting direction for a line may be chosen differently from one segmentation to another of the operating area 205.

Figure 4B shows an alternative or second segmentation of the operating area 205, where four other segments S1, S2, S3, S4 have been determined, in contrast to the first segmentation as in figure 4A. It should be noted that the number of segments in a segmentation may be different and need not be the same, as in the examples of figures 4A and 4B where the first segmentation has three segments and the second segmentation has four segments.

It should also be noted for all embodiments that a shadowed area need not be completely covered by a segment, but may extend through several segments, partially or fully.

A segment or segmentation may be regarded as a manner of traversing the operating area 205.

In some embodiments, the time spent in shadowed areas is determined for a segmentation. If a segment of a segmentation is entirely in a shadowed area, this segmentation is discarded in some embodiments. In some embodiments the segmentation is discarded if the segment entirely in a shadowed area falls under an acceptance threshold. The acceptance threshold is in some embodiments based on a size of a segment. In some embodiments the acceptance threshold corresponds to a size which the robotic work tool is considered to be able to traverse without utilizing satellite navigation at an acceptable error. The acceptance threshold may thus also be dependent on the navigation method used, and an accuracy for that navigation method.,

The time spent in shadowed areas for different segmentations are compared and the segmentation that has the shortest time spent in shadowed areas is selected as the plan for the operating area 205.

In some embodiments, the number of manoeuvres in shadowed areas is determined for a segmentation. Same as in above, if a segment of a segmentation is entirely in a shadowed area, this segmentation is discarded.

The number of manoeuvres in shadowed areas for different segmentations are compared and the segmentation that has the lower number of manoeuvres in shadowed areas is selected as the plan for the operating area 205.

In some embodiments, the distance travelled in shadowed areas is determined for a segmentation. Same as in above, if a segment of a segmentation is entirely in a shadowed area, this segmentation is discarded.

The distance travelled in shadowed areas for different segmentations are compared and the segmentation that has the lower distance travelled in shadowed areas is selected as the plan for the operating area 205.

The distance travelled in shadowed areas for different segmentations are compared and the segmentation that has the shorter distance travelled in shadowed areas is selected as the plan for the operating area 205. The distance travelled, may be determined as the distance travelled in total in some embodiments. The distance travelled, may be determined as an average distance travelled for each pass in some embodiments. The distance travelled, may be determined as a longest distance travelled for each pass in some embodiments. The distance travelled may also be determined as a (weighted) combination of these manners.

In some embodiments, the time travelled (or rather spent) in shadowed areas is determined for a segmentation.

The time travelled in shadowed areas for different segmentations are compared and the segmentation that has the shorter time travelled in shadowed areas is selected as the plan for the operating area 205.

The time travelled in shadowed areas for different segmentations are compared and the segmentation that has the shorter time travelled in shadowed areas is selected as the plan for the operating area 205. The time travelled, may be determined as the time travelled in total in some embodiments. The time travelled, may be determined as an average time travelled for each pass in some embodiments. The time travelled, may be determined as a longest time travelled for each pass in some embodiments. The time travelled may also be determined as a (weighted) combination of these manners.

The segmentation selected may be determined as a (weighted) combination of these manners of selecting a segmentation.

The planning is thus arranged to select segments prioritizing a minimization of time spent, distance travelled and/or number of manoeuvres in the shadowed area.

Returning to figure 4B it is fairly easy to see that the robotic work tool 100 will have a shorter longest time in the shadowed area (at least) for each pass and the segmentation of figure 4B will be selected over the segmentation of figure 4A.

The planning is, in some embodiments, performed by the robotic work tool 100, and the planning is, in some embodiments, performed by the server 240, and in some embodiments the planning is performed by the robotic work tool 100 and the server 240 in combination. In embodiments where the controller 240A of the server 240 is involved in the planning, the controller 110 of the robotic work tool 100 is seen as comprising the controller 240A of the server, such as by being connected to it, or by receiving the planning from it.

The planning according to herein is thus adapted so that a scoring of a segment(-ation) is taken into account, where each segment is scored based on time spent in shadowed area, distance travelled in the shadowed area, and/or the number of manoeuvres in the shadowed area. The scoring may be for the total operation or for each pass of the segment

In some embodiments the planning also includes that the robotic work tool is allowed to approach a border 220 at a first border distance outside the shadowed area, and allowed to approach a border 220 at a second border distance inside the shadowed area, wherein the first border distance is shorter than the second border distance. In some embodiments the first border distance is 1, 2, 5, 10 or 20 cm (or in any range there-inbetween) and the second border distance is 5, 10, 30 or 50 cm (or in any range there-inbetween).

The planning according to herein may thus in some situations trade cutting time effectiveness (minimize m^2/s) with having shorter coherent times spent dead-reckoning.

The idea of segmentation can simply be explained as that a planning algorithm decomposes the operating area into multiple monotone polygonal cells (such as convex cells) (part of the map), these cells or segments are then planned and assigned an objective cost individually. After finding the segment with the lowest cost, the segment is chosen and then removed from the original working area, the procedure is then repeated until the whole operating area is planned with individual segments which are then connected by transport paths. The split and merge algorithm includes a way to forbid certain driving directions for certain areas, to for example avoid driving on slopes at certain angles.

The method discussed herein can be used when comparing path alternatives, and can be part of an optimization iteration when planning a portion of a path or for whole planned routes.

The method discussed herein can further be combined with other criteria such as estimated cutting time, to provide a trade-off between positioning error and total mowing time. To estimate the dead-reckoning error, the areas known to have low RTK-GPS accuracy are defined in the operating area and given an accuracy rating. The dead-reckoning error can then be estimated using multiple parameters such as the estimated time or distance travelled, and/or total change in heading (how much the mower turns, such as the number of manoeuvres) inside the dead-reckoning zone (shadowed area) before we can attain good RTK-GPS position again.

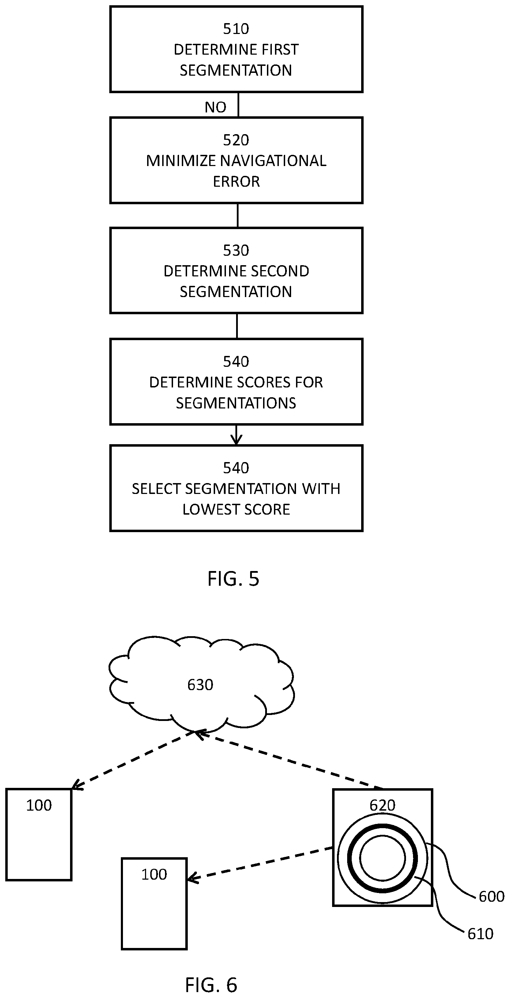

Figure 5 shows a flowchart for a general method according to herein. The method is for use in a robotic work tool as in figure 1 in a manner as discussed above in relation to figures 2, 3A, 3B, 3C, 4A and 4B, namely for use in a robotic work tool system comprising a robotic work tool 100 arranged to operate in an operational area 205.

The robotic work tool, or rather the controller 110 of the robotic work tool 100 and/or the controller 240A of the server 240, determines 510 a first segmentation of the operating area (205) by minimizing (520) a navigational error introduced in the one or more satellite-shadowed areas (SA).

Figure 6 shows a schematic view of a computer-readable medium 600 carrying computer instructions 610 that when loaded into and executed by a controller of a robotic work tool 100, enables the robotic work tool 100 to implement the teachings herein. The computer-readable medium 600 may be tangible such as a hard drive or a flash memory, for example a USB memory stick or a cloud server. Alternatively, the computer-readable medium 600 may be intangible such as a signal carrying the computer instructions enabling the computer instructions to be downloaded through a network connection, such as an internet connection. In the example of figure 6, a computer-readable medium 600 is shown as being a hard drive or computer disc 600 carrying computer-readable computer instructions 610, being inserted in a computer disc reader 620. The computer disc reader 620 may be part of a cloud server 630 - or other server - or the computer disc reader 620 may be connected to a cloud server 630 - or other server. The cloud server 630 may be part of the internet or at least connected to the internet. The cloud server 630 may alternatively be connected through a proprietary or dedicated connection. In one example embodiment, the computer instructions are stored at a remote server 630 and be downloaded to the memory 120 of the robotic work tool 100 for being executed by the controller 110.

The computer disc reader 620 may also or alternatively be connected to (or possibly inserted into) a robotic work tool 100 for transferring the computer-readable computer instructions 610 to a controller of the robotic work tool 100 (presumably via a memory of the robotic work tool 100).

Figure 6 shows both the situation when a robotic work tool 100 receives the computer-readable computer instructions 610 via a server connection and the situation when another robotic work tool 100 receives the computer-readable computer instructions 610 through a wired interface. This enables for computer-readable computer instructions 610 being downloaded into a robotic work tool 100 thereby enabling the robotic work tool 100 to operate according to and implement the invention as disclosed herein.

## Claims

1. A robotic work tool system (200) comprising a robotic work tool (100) arranged to operate in an operational area (205) having one or more satellite-shadowed areas (SA), a controller (110, 240A), a memory (120), a satellite navigation sensor (175) and one or more deduced reckoning sensors (180), wherein the
robotic work tool (100) is configured to operate according to the satellite navigation sensor (175) outside the one or more satellite-shadowed areas (SA) and according to the one or more deduced reckoning sensors (180) inside the one or more satellite-shadowed areas (SA), wherein the memory (120) is configured to
store a map of the operating area, said map application indicting a number of obstacles (H, T), and wherein the controller (110, 240A) is configured to
determine (510) a first segmentation of the operating area (205) by minimizing (520) a navigational error introduced in the one or more satellite-shadowed areas (SA).

2. The robotic work tool system (200) according to claim 1, wherein the controller (110) is further configured to minimize the navigational error introduced in the one or more satellite-shadowed areas (SA) by
minimizing the time spent in the one or more satellite-shadowed areas (SA).

3. The robotic work tool system (200) according to claim 1 or 2, wherein the controller (110) is further configured to minimize the navigational error introduced in the one or more satellite-shadowed areas (SA) by
minimizing the distance travelled in the one or more satellite-shadowed areas (SA).

4. The robotic work tool system (200) according to any preceding claim, wherein the controller (110) is further configured to minimize the navigational error introduced in the one or more satellite-shadowed areas (SA) by
minimizing the time travelled in the one or more satellite-shadowed areas (SA).

5. The robotic work tool system (200) according to any preceding claim, wherein the controller (110) is further configured to minimize the navigational error introduced in the one or more satellite-shadowed areas (SA) by
minimizing the number of manoeuvres in the one or more satellite-shadowed areas (SA).

6. The robotic work tool system (200) according to any preceding claim, wherein the controller (110) is further configured to
determine a first score for the first segmentation,
determine a second segmentation,
determine a second score for the second segmentation,
compare the first score to the second score and select the segmentation with the lowest score.

7. The robotic work tool system (200) according to claim 6, wherein the controller (110) is further configured to determine the score for a segmentation based on the time spent in the one or more satellite-shadowed areas (SA).

8. The robotic work tool system (200) according to claim 6 or 7, wherein the controller (110) is further configured to determine the score for a segmentation based on the distance travelled in the one or more satellite-shadowed areas (SA).

9. The robotic work tool system (200) according to claim 6, 7 or 8, wherein the controller (110) is further configured to determine the score for a segmentation based on the number of manoeuvres in the one or more satellite-shadowed areas (SA).

10. The robotic work tool system (200) according to any preceding claim, wherein the controller (110) is further configured to
determine a planned traversal of a segment in the segmentation as back-and-forth.

11. The robotic work tool system (200) according to any preceding claim, wherein the controller (110) is further configured to determine the planned traversal of a segment in the segmentation as back-and-forth in a satellite-shadowed area in a direction not parallel to a longer extent of the satellite-shadowed area.

12. The robotic work tool system (200) according to any preceding claim, wherein the robotic work tool (100) is a robotic lawnmower (100).

13. The robotic work tool system (200) according to any preceding claim, wherein the robotic work tool system (200) comprises a server (240) comprising the controller (240A).

14. The robotic work tool system (200) according to any preceding claim, wherein the robotic work tool (100) comprises the controller (110).

15. A method for use in a robotic work tool system (200) comprising a robotic work tool (100) arranged to operate in an operational area (205) having one or more satellite-shadowed areas (SA), a controller (110, 240A), a memory (120), a satellite navigation sensor (175) and one or more deduced reckoning sensors (180), wherein the
robotic work tool (100) is configured to operate according to the satellite navigation sensor (175) outside the one or more satellite-shadowed areas (SA) and according to the one or more deduced reckoning sensors (180) inside the one or more satellite-shadowed areas (SA), wherein the memory (120) is configured to
store a map of the operating area, said map application indicting a number of obstacles (H, T), and wherein the method comprises
determining (510) a first segmentation of the operating area (205) by minimizing (520) a navigational error introduced in the one or more satellite-shadowed areas (SA).

16. A computer-readable medium (600) carrying computer instructions (610) that when loaded into and executed by a controller (110) of a robotic work tool (100) enables the robotic work tool (100) to implement the method according to claim 15.
